# EUROPÄISCHE PATENTSCHRIFT

(11) **EP 2 153 941 B1**
(45) Veröffentlichungstag und Bekanntmachung des Hinweises auf die Patenterteilung: **14.12.2011**
(21) Anmeldenummer: 09165140.6
(22) Anmeldetag: 10.07.2009
(51) Int. Cl.: B25B 27/00, B66F 15/00

(54) **Vorrichtung**
Device
Dispositif

(30) Priorität: 05.08.2008 DE 102008040998
(43) Veröffentlichungstag der Anmeldung: 17.02.2010
(73) Patentinhaber: Müller, Michael, 96231 Staffelstein (DE)
(72) Erfinder: Müller, Michael, 96231 Staffelstein (DE)
(74) Vertreter: Peckmann, Ralf

(56) Entgegenhaltungen:
- US-A- 3 817 549
- US-A- 5 769 395
- US-A1- 2003 075 710
- US-B1- 6 375 162
- US-B1- 6 606 775

## Beschreibung

Die Erfindung betrifft eine Vorrichtung zum Entkoppeln eines sich mit einer Kraftfahrzeugkomponente im Eingriff befindenden Strukturelementes, insbesondere eine Vorrichtung zum Aushebeln von Querlenkern von Kraftfahrzeugen.

Ein Querlenker ist ein Teil der Radaufhängung von zweispurigen Fahrzeugen. Er ist quer zur Fahrtrichtung eingebaut und gelenkig mit Karosserie und Radträger verbunden ("angelenkt").

Der Querlenker nimmt zusammen mit dem Federbeindom (der die vertikalen Kräfte (das Gewicht des Fahrzeugs) trägt) die beim Beschleunigen, Bremsen und Kurvenfahren auftretenden horizontalen Kräfte auf. Er ist außer dem oberen Domlager die zweite, untere Lagerung der vertikalen Achse, um die die Lenkbewegungen ausgeführt werden. Der Querlenker ist um eine Rotationsachse, die durch die beiden Lagerungen an der Karosserie in Fahrtrichtung verläuft, mehr oder weniger beweglich, um die vertikalen Bewegungen des Federbeines (Federung) zuzulassen. An der Karosserie wird er gewöhnlich in einem Gummi-Metall Verbundlager aufgehängt. Das Lager, das den Querlenker mit dem Federbein verbindet, ist heute meistens ein Kugelgelenk, das aus einer federbeinseitigen Aufnahme und einem querträgerseitigen Zapfen besteht. Die Aufnahme kann verschiedene Formen habe. Sie ist z.B. als Kegelsitz oder Zylindersitz ausgebildet.

Für einen verschleißbedingten Wechsel der Kugelgelenke vom Querlenker muss in der Regel der gesamte Querlenker gewechselt werden. Dazu muss die Kugelgelenkverbindung zwischen Querträger und Federbein gelöst werden. Hierfür werden z.B. Hebel eingesetzt, mit denen der Querträger mit dem Zapfen nach unten aus der Aufnahme des Federbeins herausgehebelt wird.

Die Druckschrift US 6,606,775 B1 beschreibt eine Vorrichtung mit den Merkmalen gemäß dem Oberbegriff des Anspruchs 1.

Bei den bisher verwendeten Werkzeugen hat sich als nachteilig erwiesen, dass sie unzureichend an die Geometrie verschiedener Fahrzeuge angepasst werden können, leicht abrutschen oder eine schlecht angepasste Geometrie aufweisen. Da die Länge der Querträger, die Gelenkgeometrie, der Querschnitt der Querträger und die Einbauraumverhältnisse von Fahrzeug zu Fahrzeug variieren, kann eine nicht veränderbare Geometrie von Hebeln zum Aushebeln von Querträgern nicht immer optimal sein. Ferner ist es kostenintensiv und Platz beanspruchend für eine Werkstatt für die verschiedenen Kraftfahrzeugtypen jeweils ein Werkzeug mit einer bestimmten Geometrie anzuschaffen.

Es ist daher eine Aufgabe der vorliegenden Erfindung eine Vorrichtung zum Entkoppeln eines sich mit einer Kraftfahrzeugkomponente im Eingriff befindenden Strukturelementes, insbesondere eine Vorrichtung zum Aushebeln von Querlenkern von Kraftfahrzeugen zur Verfügung zu stellen, die in ihrer Geometrie verändert werden kann, so dass sie für verschiedene Kraftfahrzeugtypen optimal eingesetzt werden kann.

Die Aufgabe wird erfindungsgemäß durch eine Vorrichtung mit den Merkmalen des Patentanspruchs 1 gelöst. Bevorzugte weitere Ausgestaltungen der Erfindung sind in den abhängigen Ansprüchen angegeben.

Die erfindungsgemäße Vorrichtung zum Entkoppeln eines sich mit einer Kraftfahrzeugkomponente im Eingriff befindenden Strukturelementes, umfasst: einen Hebel, welcher einen proximalen Endabschnitt zum Abstützen des Hebels an einem zugeordneten Abschnitt des zu entkoppelnden Strukturelementes und einen Griffabschnitt zur Handhabung der Vorrichtung aufweist; eine Befestigungseinrichtung, welche an dem Hebel angeformt ist; und ein Eingriffselement, welches an der Befestigungseinrichtung lösbar und positionsverstellbar für einen an einen Bauraum optimal angepassten Eingriff an dem zu entkoppelnden Strukturelement anbringbar ist.

Die Vorrichtung wird bevorzugt für das Aushebeln einer Gelenkverbindung mit dem Eingreifelement und insbesondere mit einem Haken in einen Querlenker eines Kraftfahrzeuges eingehenkt. Der proximale Endabschnitt wird an den Querlenker angesetzt. Wird der Hebel nun an seinem Griffabschnitt durch einen Bediener heruntergedrückt, wird der Querlenker nach unten gezogen. Dabei stützt sich der Hebel mit dem proximalen Endabschnitt an dem Querlenker ab. Der Zapfen an dem Querlenker wird auf diese Weise aus der Aufnahme des Federbeins herausgezogen und somit die Gelenkverbindung zwischen Querlenker und Federbein getrennt.

Um eine optimale Anpassung an die Geometrie des Querlenkers und des Fahrzeugs zu erreichen, kann die Position des Eingreifelementes relativ zu dem proximalen Endabschnitt im Wesentlichen entlang des Hebels verändert werden. Ferner ist gemäß einer bevorzugten Ausführungsform vorgesehen, dass das Eingreifelement auch in seinem Abstand zum Hebel veränderbar ist, um eine Anpassung an das Strukturelement, insbesondere einen Querlenker zu ermöglichen. Ferner ist vorteilhaft, am proximalen Endabschnitt ein elastisches Element vorzusehen, um die Kerbwirkung am Querlenker zu verringern und Beschädigungen am Querlenker zu vermeiden.

Die Erfindung wird im Folgenden anhand von Ausführungsbeispielen unter Bezugnahme auf die beiliegenden Figuren näher erläutert. Gleiche Bezugszeichen bezeichnen in den Figuren jeweils gleiche Komponenten, wenn dies nicht anders angegeben ist.

Von den Figuren zeigen:
- Fig. 1: eine schematische Schnittdarstellung einer erfindungs- gemäßen Vorrichtung gemäß einem ersten Ausführungsbei- spiel angesetzt an einen Querlenker eines Kraftfahrzeuges;
- Fig. 2: eine perspektivische Ansicht schräg von oben eines Teils einer Vorrichtung 1 gemäß einem zweiten Ausführungs- beispiel.

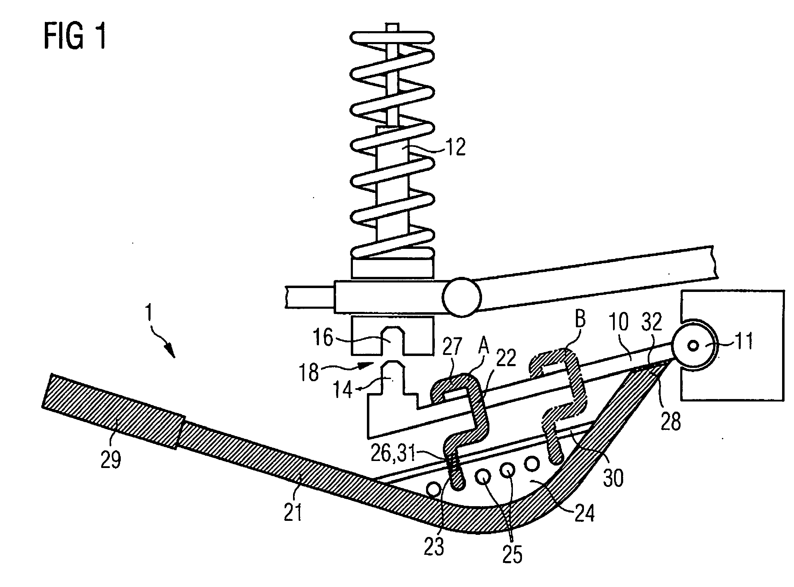

Fig. 1 zeigt eine schematische Schnittdarstellung einer erfindungsgemäßen Vorrichtung 1 gemäß einem ersten Ausführungsbeispiel angesetzt an einen Querlenker 10 eines Fahrwerks eines Kraftfahrzeuges. Die Vorrichtung 1 ist schraffiert dargestellt, während die Fahrwerkskomponenten ohne Füllung dargestellt sind. Der Querlenker 10 des Fahrwerks verläuft in der Figur 1 von links unten nach schräg rechts oben. Der Querlenker endet rechts in einem Lager 11, das hier als Kreis dargestellt ist. Auf der anderen linken Seite in der Figur weist der Querlenker 10 einen im Wesentlichen nach oben gerichteten Zapfen 14 auf. Oberhalb des Zapfens 14 ist ein Federbein 12 des Kraftfahrzeugfahrwerkes mit vertikaler Orientierung dargestellt. Das Federbein 12 weist an seinem unteren Ende eine Aufnahme 16 auf. Die Vorrichtung 1 ist im Wesentlichen unterhalb der beschriebenen Fahrwerkskomponenten angeordnet. Sie weist bei diesem Ausführungsbeispiel einen schraffiert dargestellten, bogenförmig von links nach rechts verlaufenden Hebel 21 aus Rundstahl auf. An einem mittleren Teil ist oberhalb des Hebels 21 eine Befestigungseinrichtung 24 mit Löchern 25 dargestellt. An den Löchern 25 der Befestigungseinrichtung 24 ist ein Eingreifelement 22, das oben einen Haken 27 aufweist, dargestellt. Der Haken 27 ist mit dem Eingreifelement 22 so mittels einer einzelnen Gewindeverbindung 31 verbunden, das er durch Verdrehen in das Eingreifelement eingeschraubt ist. Die Gewindeverbindung 31 ist Bestandteil einer Höheneinstelleinrichtung 26. Das Eingreifelement 22 ist links in einer Position A und rechts heller schraffiert in einer Position B dargestellt. Der Haken 27 an dem Eingreifelement 22 befindet sich in den Querlenker eingehakt. Das Eingreifelement weist unten ein Loch 35 einer Höhenarretierung 34 auf, das sich mit einem der Löcher 25 an der Befestigungseinrichtung deckt. Ein Arretierungsbolzen (nicht dargestellt) verläuft in der Bildebene vertikal durch das Loch 35 in eines der Löcher 25. Die Vorrichtung weist an ihrem einen Ende (in der Figur links) einen Griffabschnitt 29 und an ihrem anderen Ende einen proximalen Endabschnitt 28 mit einem elastischen Element 32 auf. Der proximale Endabschnitt 28 liegt in der Figur mit dem elastischen Element 32 an dem Querlenker 10 an.

Der Querlenker 10 ist einendig schwenkbar in dem Lager 11 gelagert und wird anderendig mittels des Zapfens 14 in der Aufnahme 16 an dem Federbein 12 des Fahrwerks gelenkig angebracht. Der Zapfen 14 des Querlenkers 10 bildet somit zusammen mit der Aufnahme 16 des Federbeins 12 eine Gelenkverbindung 18. An dem Hebel 21 der Vorrichtung 1 sind die Eingreifelemente mittels der Befestigungseinrichtung 24 angebracht. Die Vorrichtung 1 wird für das Aushebeln einer Gelenkverbindung 18 mit dem Eingreifelement 22 und insbesondere mit dem Haken 27 in den Querlenker 10 eingehakt. Der proximale Endabschnitt 28, der bei dieser Ausführungsform ein elastisches Element 32 aufweist, wird an den Querlenker 10 angesetzt. Wird der Hebel 21 nun an seinem Griffabschnitt 29 durch einen Bediener heruntergedrückt, wird der Querlenker 10 nach untern gezogen. Dabei stützt sich der Hebel 21 mit dem proximalen Endabschnitt 28 an dem Querlenker 10 ab. Der Zapfen 14 an dem Querlenker 10 wird auf diese Weise aus der Aufnahme 16 des Federbeins 12 herausgezogen und somit die Gelenkverbindung 18 zwischen Querlenker 10 und Federbein 12 getrennt.

Für eine Anpassung der Vorrichtung 1 an die Geometrie des Fahrwerks wird das Eingreifelement 22 an einer passenden Position an der Befestigungseinrichtung 24 der Vorrichtung 1 arretiert. Dies geschieht mittels des Arretierungsbolzens 23. Der Arretierungsbolzen 23 wird durch ein Loch 35 im Eingreifelement 22 in ein Loch in der Befestigungseinrichtung geschoben. Dadurch wird das Eingreifelement 22 an der Befestigungseinrichtung 24 arretiert. Dabei sind die Löcher 25 an der Befestigungseinrichtung 24 in Abständen längs des Hebels 21 angeordnet, so dass sich entsprechend einer Arretierung an einem der Löcher 25 ein spezifisches Hebelverhältnis im Hinblick auf den Abstand des Eingreifelementes 22 zum proximalen Endabschnitt 28 und dem Griffabschnitt 29 ergibt. Ferner ist so eine Anpassung an die Länge und die Einbausituation des Querlenkers 10 möglich.

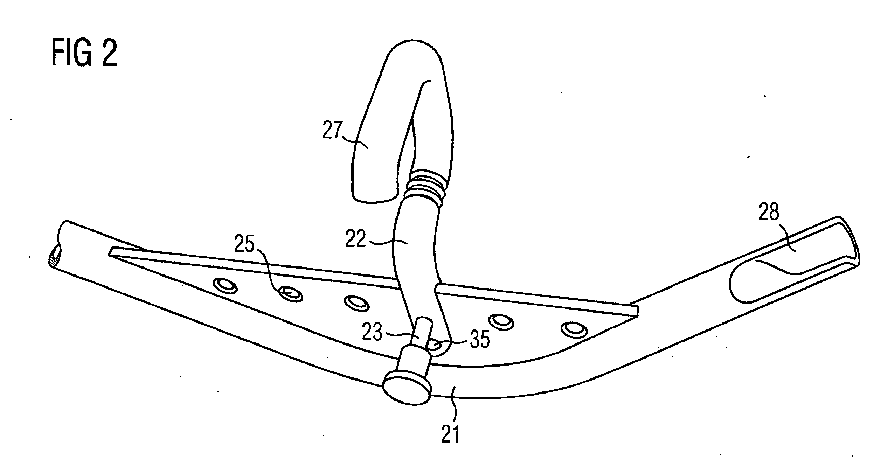

Fig. 2 zeigt eine perspektivische Ansicht schräg von oben eines Teils einer Vorrichtung 1 gemäß einem zweiten Ausführungsbeispiel. Ein Haken 27 eines Eingreifelementes 22 ist oben dargestellt. Darunter befindet sich ein Hebel 21 mit einem proximalen Endabschnitt 28 einer erfindungsgemäßen Vorrichtung 1. Ein Arretierungsbolzen 23 ist im Eingriff mit dem Eingreifelement 22 und einer Befestigungseinrichtung 24 dargestellt. Dazu weist das Eingreifelement 22 mehrere Löcher 35 auf, die hier in der Figur im Wesentlichen vertikal nebeneinander angeordnet sind. Durch das Arretieren des Eingreifelementes 22 an den verschiedenen Löchern 35 kann der Abstand des Eingreifelementes 22 von dem Hebel 21 variiert werden. Dadurch ist eine Anpassung an die Geometrie des Querlenkers und die Einbauraumverhältnisse möglich.

Obwohl die vorliegende Erfindung anhand bevorzugter Ausführungsbeispiele vorliegend beschrieben wurde, ist sie darauf nicht beschränkt, sondern auf vielfältige Weise modifizierbar. So kann die Vorrichtung neben dem Aushebeln von Querlenkern auch zum Lösen weiterer lösbar am Kraftfahrzeug angebrachten Strukturelementen verwendet werden.

### Bezugszeichenliste

- 1: Vorrichtung
- 10: Strukturelement, Querlenker
- 11: Lager
- 12: Federbein
- 14: Zapfen
- 16: Aufnahme
- 18: Gelenkverbindung
- 21: Hebel
- 22: Eingreifelement
- 23: Arretierungsbolzen
- 24: Befestigungseinrichtung
- 25: Löcher
- 26: Höheneinstelleinrichtung
- 27: Haken
- 28: Proximaler Endabschnitt
- 29: Griffabschnitt
- 30: Schiene
- 31: Gewindeverbindung
- 32: elastisches Element
- 34: Höhenarretierung
- 35: Löcher im Eingreifelement
- A: erste Hebelposition
- B: zweite Hebelposition

## Patentansprüche

1. Vorrichtung (1) zum Entkoppeln eines sich mit einer Kraftfahrzeugkomponente im Eingriff befindenden Strukturelementes (10), mit:
einem Hebel (21), welcher einen proximalen Endabschnitt (28) zum Abstützen des Hebels (21) an einem zugeordneten Abschnitt des zu entkoppelnden Strukturelementes (10) und einen Griffabschnitt (29) zur Handhabung der Vorrichtung (1) aufweist;
**dadurch gekennzeichnet,**
**dass** die Vorrichtung (1) eine Befestigungsplatte (24), welche an dem Hebel (21) angeformt ist, und ein Eingreifelement (22) aufweist, welches für einen an einen Bauraum optimal angepassten Eingriff an dem zu entkoppelnden Strukturelement (10) an einer passenden Position an der Befestigungsplatte (24) arretierbar ist.

2. Vorrichtung (1) nach Anspruch 1, **dadurch gekennzeichnet, dass** das Eingreifelement (22) in wenigstens einer ersten Hebelposition (A) und einer zweiten Hebelposition (B) arretierbar ist, wobei das Eingreifelement (22) in der ersten Hebelposition (A) einen größeren Abstand zum proximalen Endabschnitt (28) aufweist als in der zweiten Hebelposition (B).

3. Vorrichtung (1) nach Anspruch 1 oder 2, **dadurch gekennzeichnet, dass** die Befestigungsplatte (24) Löcher (25) zum Aufnehmen von Arretierungsbolzen (23) des Eingreifelements (22) aufweist.

4. Vorrichtung (1) nach einem der vorhergehenden Ansprüche, **dadurch gekennzeichnet, dass** das Eingreifelement (22) an einer Schiene (30) an der Befestigungsplatte (24) geführt ist.

5. Vorrichtung (1) nach einem der vorhergehenden Ansprüche, **dadurch gekennzeichnet, dass** der Hebel (21) eine Höhenverstelleinrichtung (26) aufweist, an der das Eingreifelement (22) in wenigstens einer ersten Position und einer zweiten Position arretierbar ist, wobei das Eingreifelement (22) in der ersten Position näher am Hebel (21) angeordnet ist, als in der zweiten Position.

6. Vorrichtung (1) nach einem der vorhergehenden Ansprüche, **dadurch gekennzeichnet, dass** das Eingreifelement (22) gelenkig an dem Hebel (21) angebracht ist.

7. Vorrichtung (1) nach einem der vorhergehenden Ansprüche, **dadurch gekennzeichnet, dass** das Eingreifelement (22) einen Haken (27) zum Einhaken in das Strukturelement (10) aufweist.

8. Vorrichtung (1) nach Anspruch 7, **dadurch gekennzeichnet, dass** der Haken (27), in zwei im Wesentlichen um 180° verdreht zueinander angeordneten Stellungen an der Befestigungsplatte (24) anbringbar ist, so dass er von verschiedenen Seiten in das Strukturelement (10) einhakbar ist.

9. Vorrichtung (1) nach einem der vorhergehenden Ansprüche, **dadurch gekennzeichnet, dass** das Eingreifelement (22) mit dem Haken (27) durch eine Gewindeverbindung, Steckverbindung oder formschlüssige Verbindung (31) verbunden ist.

10. Vorrichtung (1) nach einem der vorhergehenden Ansprüche, **dadurch gekennzeichnet, dass** der Hebel (21) einen Hohlquerschnitt aufweist.

11. Vorrichtung (1) nach einem der vorhergehenden Ansprüche, **dadurch gekennzeichnet, dass** der proximale Endabschnitt (28) an den Hebel (21) angeschraubt, angeschweißt, angelötet oder angeformt ist.

12. Vorrichtung (1) nach einem der vorhergehenden Ansprüche, **dadurch gekennzeichnet, dass** der proximale Endabschnitt (28) im Wesentlichen als aufgebogener Rohrsegmentquerschnitt des Hebels (21) gebildet ist.

13. Vorrichtung (1) nach einem der vorhergehenden Ansprüche, **dadurch gekennzeichnet, dass** der proximale Endabschnitt (28) ein elastisches Element (32), insbesondere aus Gummi oder Kunststoff, zum Anlegen und Abstützen am Strukturelement (10) aufweist.

14. Vorrichtung (1) nach einem der vorhergehenden Ansprüche, **dadurch gekennzeichnet, dass** das Eingreifelement (22) eine Höhenarretierung aufweist, mittels der das Eingreifelement (22) in wenigstens der ersten Position und der zweiten Position arretierbar ist.

15. Vorrichtung (1) nach Anspruch 14, **dadurch gekennzeichnet, dass** die Höhenarretierung mittels Löchern (35) im Eingreifelement (22) gebildet ist, in die wenigstens ein Arretierungsbolzen (23) eingreift.

## Claims

1. A device (1) for uncoupling a structural element (10) in engagement with a motor vehicle component, having:
a lever (21), which comprises a proximal end portion (28) for supporting the lever (21) against an associated portion of the structural element (10) to be uncoupled and a handle portion (29) for manoeuvring the device (1);
**characterised in that**
the device (1) comprises a fastening plate (24), which is formed on the lever (21), and an engaging element (22), which may be locked in a suitable position on the fastening plate (24) such that engagement with the structural element (10) to be uncoupled is optimally adapted to a structural space.

2. A device (1) according to claim 1, **characterised in that** the engaging element (22) may be locked in at least a first lever position (A) and a second lever position (B), the engaging element (22) being at a greater distance from the proximal end portion (28) in the first lever position (A) than in the second lever position (B).

3. A device (1) according to claim 1 or claim 2, **characterised in that** the fastening plate (24) comprises holes (25) for accommodating locking pins (23) of the engaging element (22).

4. A device (1) according to any one of the preceding claims, **characterised in that** the engaging element (22) is guided on a rail (30) on the fastening plate (24).

5. A device (1) according to any one of the preceding claims, **characterised in that** the lever (21) comprises a height adjusting means (26), on which the engaging element (22) may be locked in at least a first position and a second position, the engaging element (22) being arranged closer to the lever (21) in the first position than in the second position.

6. A device (1) according to any one of the preceding claims, **characterised in that** the engaging element (22) is mounted in articulated manner on the lever (21).

7. A device (1) according to any one of the preceding claims, **characterised in that** the engaging element (22) comprises a hook (27) for hooking into the structural element (10).

8. A device (1) according to claim 7, **characterised in that** the hook (27) may be mounted on the fastening plate (24) in two positions arranged at substantially 180° to one another, such that it may be hooked into the structural element (10) from different sides.

9. A device (1) according to any one of the preceding claims, **characterised in that** the engaging element (22) is connected to the hook (27) by a screw connection, plug-in connection or interlocking connection (31).

10. A device (1) according to any one of the preceding claims, **characterised in that** the lever (21) comprises a hollow cross section.

11. A device (1) according to any one of the preceding claims, **characterised in that** the proximal end portion (28) is screwed, welded, brazed or formed on the lever (21).

12. A device (1) according to any one of the preceding claims, **characterised in that** the proximal end portion (28) is formed substantially as a bent-up tube segment cross-section of the lever (21).

13. A device (1) according to any one of the preceding claims, **characterised in that** the proximal end portion (28) comprises a resilient element (32), in particular of rubber or plastics, for resting and supporting against the structural element (10).

14. A device (1) according to any one of the preceding claims, **characterised in that** the engaging element (22) comprises a height lock, by means of which the engaging element (22) may be locked in at least the first position and the second position.

15. A device (1) according to claim 14, **characterised in that** the height lock is formed by means of holes (35) in the engaging element (22), in which at least one locking pin (23) engages.

## Revendications

1. Dispositif (1) de désaccouplement d'un élément structurel (10) se trouvant en prise avec un composant de véhicule automobile, comprenant :
un levier (21), qui présente une section d'extrémité proximale (28) permettant d'appuyer le levier (21) contre une section associée de l'élément structurel (10) à désaccoupler et une section de manche (29) permettant de manipuler le dispositif (1) ;
**caractérisé en ce que** le dispositif présente une plaque de fixation (24), qui est formée sur le levier (21), et un élément de prise (22) qui peut être bloqué sur la plaque de fixation, dans une position appropriée, pour assurer une prise avec l'élément structurel (10) à désaccoupler parfaitement adaptée à l'espace de montage.

2. Dispositif (1) selon la revendication 1, **caractérisé en ce que** l'élément de prise (22) peut être bloqué dans au moins une première position de levier (A) et une seconde position de levier (B), l'élément de prise (22) présentant une distance par rapport à la section d'extrémité proximale (28) plus grande dans la première position de levier (A) que dans la seconde position de levier (B).

3. Dispositif (1) selon la revendication 1 ou 2, **caractérisé en ce que** la plaque de fixation (24) présente des trous (25) permettant de loger des boulons d'arrêt (23) de l'élément de prise (22).

4. Dispositif (1) selon l'une des revendications précédentes, **caractérisé en ce que** l'élément de prise (22) est guidé sur un rail (30) sur la plaque de fixation (24).

5. Dispositif (1) selon l'une des revendications précédentes, **caractérisé en ce que** le levier (21) présente un système de réglage en hauteur (26) sur lequel l'élément de prise (22) peut être bloqué dans au moins une première position et une seconde position, l'élément de prise (22) étant disposé plus près du levier (21) dans la première position que dans la seconde position.

6. Dispositif (1) selon l'une des revendications précédentes, **caractérisé en ce que** l'élément de prise (22) est fixé au levier (21) de façon articulée.

7. Dispositif (1) selon l'une des revendications précédentes, **caractérisé en ce que** l'élément de prise (22) présente un crochet (27) permettant un accrochage dans l'élément structurel (10).

8. Dispositif (1) selon la revendication 7, **caractérisé en ce que** le crochet (27) peut être fixé à la plaque de fixation (24) dans deux positions sensiblement décalées de 180° l'une par rapport à l'autre, de sorte qu'il peut être accroché dans l'élément structurel (10) par différents côtés (24).

9. Dispositif (1) selon l'une des revendications précédentes, **caractérisé en ce que** l'élément de prise (22) est relié au crochet (27) par un assemblage fileté, un assemblage par emboîtement ou un assemblage en engagement positif (31).

10. Dispositif (1) selon l'une des revendications précédentes, **caractérisé en ce que** le levier (21) présente une section creuse.

11. Dispositif (1) selon l'une des revendications précédentes, **caractérisé en ce que** la section d'extrémité proximale (28) est vissée, soudée, brasée ou formée sur le lever (21).

12. Dispositif (1) selon l'une des revendications précédentes, **caractérisé en ce que** la section d'extrémité proximale (28) est formée sensiblement comme une section de segment tubulaire coudée du levier (21).

13. Dispositif (1) selon l'une des revendications précédentes, **caractérisé en ce que** la section d'extrémité proximale (28) présente un élément élastique (32), en particulier en caoutchouc ou en plastique, pour l'application et l'appui contre l'élément structurel (10).

14. Dispositif (1) selon l'une des revendications précédentes, **caractérisé en ce que** l'élément de prise (22) présente un moyen de blocage en hauteur grâce auquel l'élément de prise (22) peut être bloqué dans au moins la première position et la seconde position.

15. Dispositif (1) selon la revendication 14, **caractérisé en ce que** le moyen de blocage en hauteur est formé à l'aide de trous (35) dans l'élément de prise, dans lesquels pénètre au moins un boulon d'arrêt (23).
